Europäisches Patentamt

European Patent Office

Office européen des brevets

(19)

(11) Publication number: **0 308 248**
A2

# EUROPEAN PATENT APPLICATION

(21) Application number: 88308603.5

(22) Date of filing: 16.09.88

(51) Int. Cl.⁴: **B 62 D 65/00**

(30) Priority: **17.09.87 US 98204**

(43) Date of publication of application:
**22.03.89 Bulletin 89/12**

(84) Designated Contracting States:
**DE ES FR GB IT SE**

(71) Applicant: **DEERE & COMPANY**
**John Deere Road**
**Moline Illinois 61265-8098 (US)**

(72) Inventor: **Bishop, John R.**
**317 Ridge Road**
**Juneau Wisconsin 53039 (US)**

**LaFleur, Scott S.**
**N8545 Hickory Road**
**Beaver Dam Wisconsin 53916 (US)**

**Macheel, Stephen J.**
**513 Gould Street**
**Beaver Dam Wisconsin 53916 (US)**

**Schneider, Wayne E.**
**821 North Street**
**Beaver Dam Wisconsin 53916 (US)**

(74) Representative: **Pears, David Ashley**
**REDDIE & GROSE 16 Theobalds Road**
**London WC1X 8PL (GB)**

(54) **Assembly line and method for vehicles or other products.**

(57) The frames of vehicles or other products to be assembled are placed on guided vehicles at a first station (37) and are then carried by the guide vehicles along a path (36) which traverses in turn a series of aligned island areas (41, 42, 43, 44, 46). In each island area the path splits into a plurality of parallel paths (36a, b, c; 36f, e, d), the guided vehicles being shunted into work stations at these parallel paths for assembly operations effected by assembly teams at the work stations. In between each pair of successive island areas, the path (36) deviates laterally into a loop (47) extending out to the side of the island areas. The loops (47) pass through kitting stations (48, 49, 51, 52) where components are placed on the guided vehicles for assembly at the succeeding work stations. An overhead conveyor (56, 59, 61, 62, 67) feeds the frames and components to the first work station (37) and the kitting stations (48, 49, 51, 52).

FIG. 3

Bundesdruckerei Berlin

**Description**

## ASSEMBLY LINE AND METHOD FOR VEHICLES OR OTHER PRODUCTS

This invention relates to an assembly line and a method for assembling a vehicle or other product, such as a lawn and garden tractor, a lawn tractor or a rider mower, as set forth in the introductory parts of claims 1 and 9. It is well known that an assembled product can be built-up completely from parts assembled on a frame of the product which is moved through a succession of work stations on an automatic guided vehicle.

Assembly line techniques utilizing separate transport carriers for carrying component parts of a product from one assembly station to another for successively adding parts or components of the product being assembled at each station until complete has been known for many years. A well-known example is in the normally straight line assembly of automobiles. Further, the provision in conjunction with such known techniques of vehicles guided by floor mounted wire systems or by radio commands as an integral part of such station to station assembly lines has been known for some time, e.g. as described in US-A 3,923,296 and US-A 3,968,559.

Such known assembly lines nevertheless fail in a number of ways necessary to achieve even sufficient partial automation and warehousing of product components in physical relation to the assembly line to provide enlightened management of the assembly line. The object of the present invention is to improve the assembly line and method in a way which leads to a significant leap in productivity, e.g. in assembling of a family of lawn and garden tractors, still within the same installation and utilizing the same processes, machinery, warehousing and personnel.

The present invention thus provides an assembly line as defined in claim 1 and an assembly method as defined in claim 9.

In a preferred practice of the invention a first work station has an overhead flow of frames for the product. The guided vehicles are guided one by one through the first work station whereat a frame is axially mounted on each vehicle. The vehicles are guided sequentially through a second work station where additional parts are assembled on each frame. A first island area has one or more work stations arranged parallel each other such that a plurality of vehicles can be shunted into position at the island area stations for teams of personnel to simultaneously assemble further parts on each frame. A first kitting area is provided whereat a flow of additional parts for further assembly are provided and the vehicles are guided sequentially out of the first island area and through the first kitting area where the additional parts are added to each vehicle for conveyance purposes. The vehicles are then guided from the first kitting area to a second island area similar to the first island area where the conveyed parts are added to the frames on each vehicle. The sequential movement of the vehicles through additional and alternating kitting areas and island areas is repeated until the product is fully assembled.

Subsidiary process features comprise providing a continuous flow and storage of product parts into kitting areas where personnel can assemble parts and place them on a vehicle as it passes through the kitting area preliminary to the vehicle moving through a succeeding island area whereat the assembled parts are then assembled to the frame and other parts previously assembled thereto, the vehicles thereby fulfilling the dual function of providing a moving assembly stage and providing also a moving, guided conveyor of parts to be subsequently assembled as a part of the product. For efficiency of time, space and personnel, manpower at each kitting area is proportional to the manpower required at each island work station.

In the preferred assembly line a path for each island provides for guiding vehicles into the island area work stations, leaves the island area and enters the next island, this path extending between adjacent island areas via a closed loop end and extending generally normal to the alignment of the island areas. The kitting stations alternate between the island areas, each kitting area being disposed about a closed loop end and having a plurality of parts located therein sufficient to make up a completed tractor product on each vehicle.

Additional features of both the method and the apparatus of this invention relate to a mower deck lifting apparatus and a mower deck blade levelling apparatus, both apparatuses being integrated into one of the island areas. A product separation device is provided for completely separating a partial or fully assembled product from a vehicle for inspection or repair purposes.

The invention will be described in more detail, by way of example, with reference to the accompanying drawings, in which

Fig. 1 is a schematic of a portion of an assembly line embodying the invention, showing part of a flow path for guided vehicles;

Fig. 2 is a continuation of the flow path of Fig. 1 showing additional work and kitting areas for assembling the tractor products;

Fig. 3 is a diagram of the closed loop assembly line embodying this invention;

Fig. 4 is an enlarged detail section of the assembly line of Fig. 3;

Fig. 5 is a side elevational view of a mower deck lifting apparatus utilized in the assembly line;

Fig. 6 is a plan view of the mower deck lifting apparatus of Fig. 5;

Fig. 7 is a side elevational view of a guided vehicle carrying a partially completed tractor prior to entering a mower deck levelling apparatus;

Fig. 8 is a rear end elevational view of the mower deck levelling apparatus having a vehicle guided therein;

Fig. 9 is a top plan view of the apparatus of Fig. 8 and showing various mower deck configurations;

Fig. 10 is a side elevational view of the mower deck levelling apparatus of Fig. 9;

Fig. 11 is a detail elevational view of a probe unit of the deck leveling apparatus;

Fig. 12 is a sectional view as taken along line 12-12 in Fig. 11;

Fig. 13 is a perspective view of a safety awareness barrier of the mower deck leveling apparatus;

Fig. 14 is an elevational end view of a tractor separating apparatus of this assembly system; and

Fig. 15 is a side elevational view of the apparatus of Fig. 14.

## Best Mode for Carrying Out the Invention

### I. Apparatus

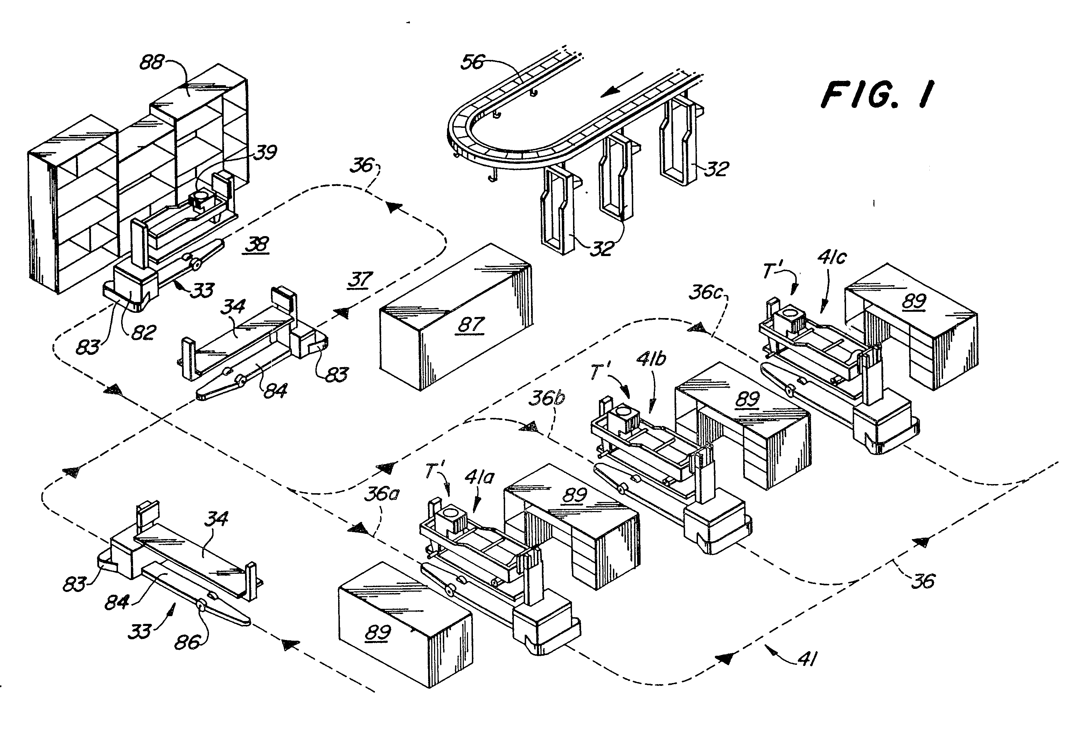

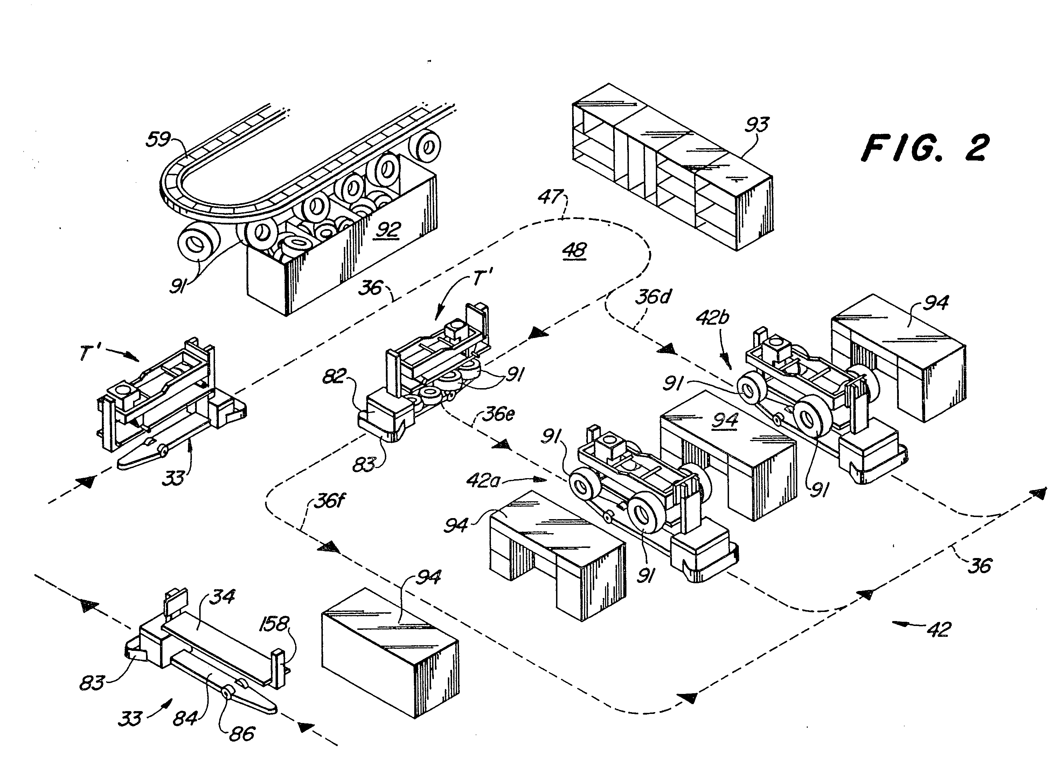

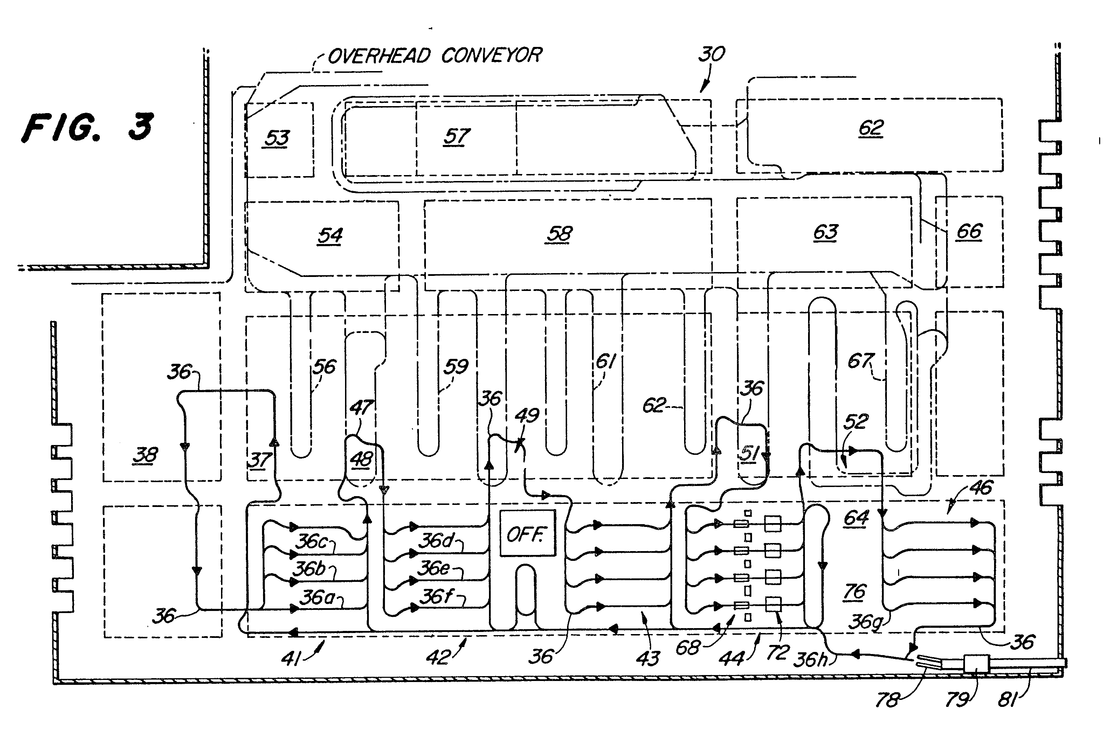

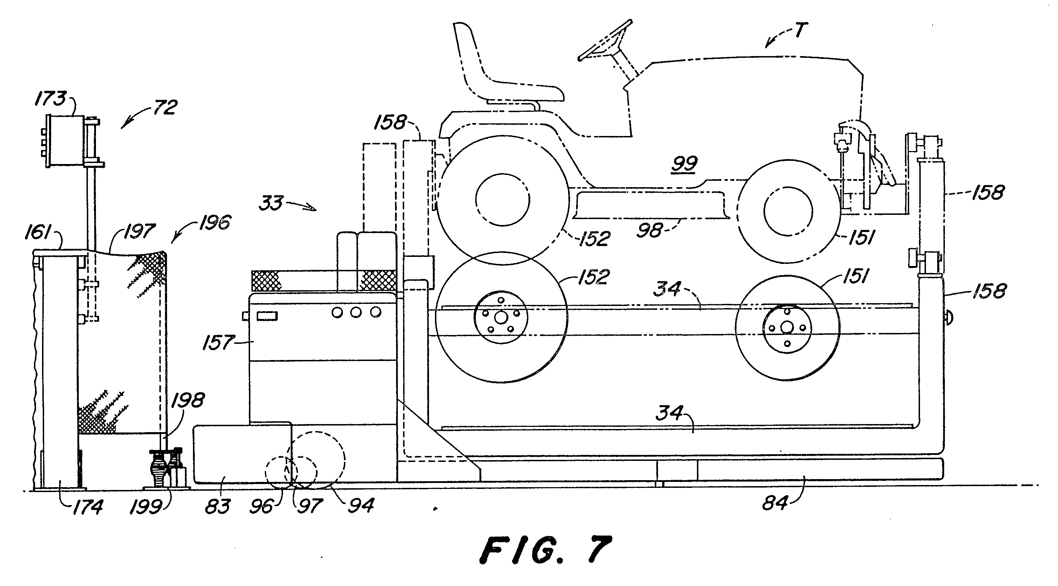

Referring now to the drawings, wherein like reference numerals designate identical or corresponding parts throughout the several views, in Figs. 1 and 2, a flexible assembly system is partially disclosed, a diagram of the entire assembly indicated generally as (30) shown in Fig. 3, for assembling a product in the instant case, a lawn and garden tractor T (Fig. 7). As described hereafter, the tractor T is built-up completely from and by association of parts with a frame (32) (Fig. 1).

The assembly comprises generally a plurality of steerable vehicles (33), each including a vertically movable work carrier (34) to which a tractor frame (32) can be attached, each vehicle (33) in the present instance guided about the assembly area by a floor embedded electric wire (36); a first work station (37) where a flow of tractor frames (32) are provided for attaching each frame (32) to a carrier (34); a second work station (38) for the assembly to each frame (32) of an engine sub-assembly (39) for example; a plurality of aligned, spaced island assembly areas of a predetermined number, five (41), (42), (43), (44), (46) shown in Fig. 3, each island area having a predetermined number of plurality of individual work stations (41a), (41b), (41c) shown in Fig. 1 for example, arranged in a parallel manner and where the guide wire (36) divides into a path for sequentially and selectively guiding each vehicle (33) through a work station (see guide wire paths 36a, 36b and 36c in Fig. 1); the guide wires (36a), (36b), (36c) then combining back into wire (36) leaving the island (41), running in a closed loop (47) arrangement and returning to the next adjacent island (42) where the guide wire again divides in a plurality of individual parallel runs (36d), (36e), (36f), (Fig. 2), through the respective individual work stations of the second island (42).

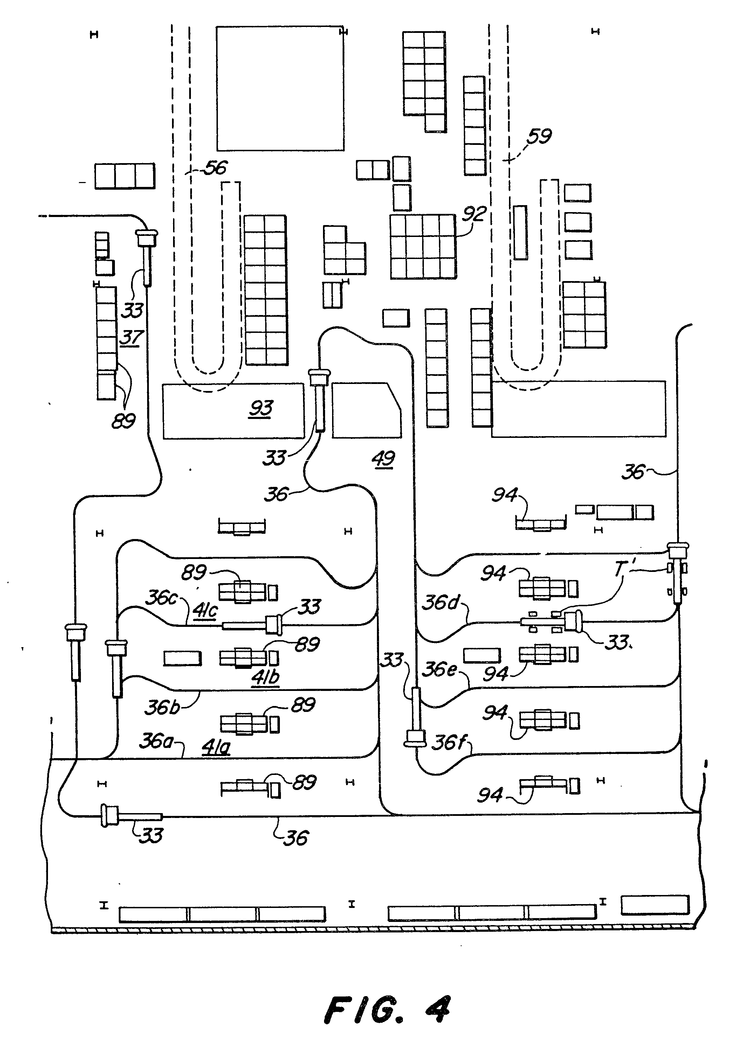

It will be noted the general path of wire (36) forming the closed loop (47) (Fig. 4) extends generally in a path normal to the paths of vehicles (33) through the islands (41)-(46) as provided by the parallel work stations of each, the vehicle paths extended therethrough in longitudinal alignment, and the guide wires running therethrough also in longitudinal alignment. At each end and disposed on either side of the closed loop wire (47) is a kitting area indicated generally at (48), other kitting areas shown at (49), (51), (52), each kitting area being a storage area of parts for further assembling the tractor, and also an area of some subassembly of parts together and to the frame (32). Beyond the kitting areas and contiguous therewith are light manufacturing areas in the nature of: robotic welding (53), (54), adjacent the rear of kitting area (48), with an overhead conveyor (56) feeding finished of semi-finished parts to the first work station (37) and the kitting area (48); miscellaneous manual welding (57) and miscellaneous robotic welding (58) adjacent the rear of kitting areas (48), (49), (51) and feeding parts thereto; and an audit area (64), another robotic welding area (63), and a welding area (66).

It will be noted that by the flow of parts in paths parallel with each other the generally parallel with the path of each wire (36) closed loop (47) for each kitting area (48), (49), (51), (52), said parts flow path from the light manufacturing areas (53), (54), (57), (58), (62), (63), (64) toward the island assembly areas (41)-(44) also extends and is directed generally normal to the path of vehicles (33) moving through the island areas (41)-(44) for having these parts assembled into tractors thereon.

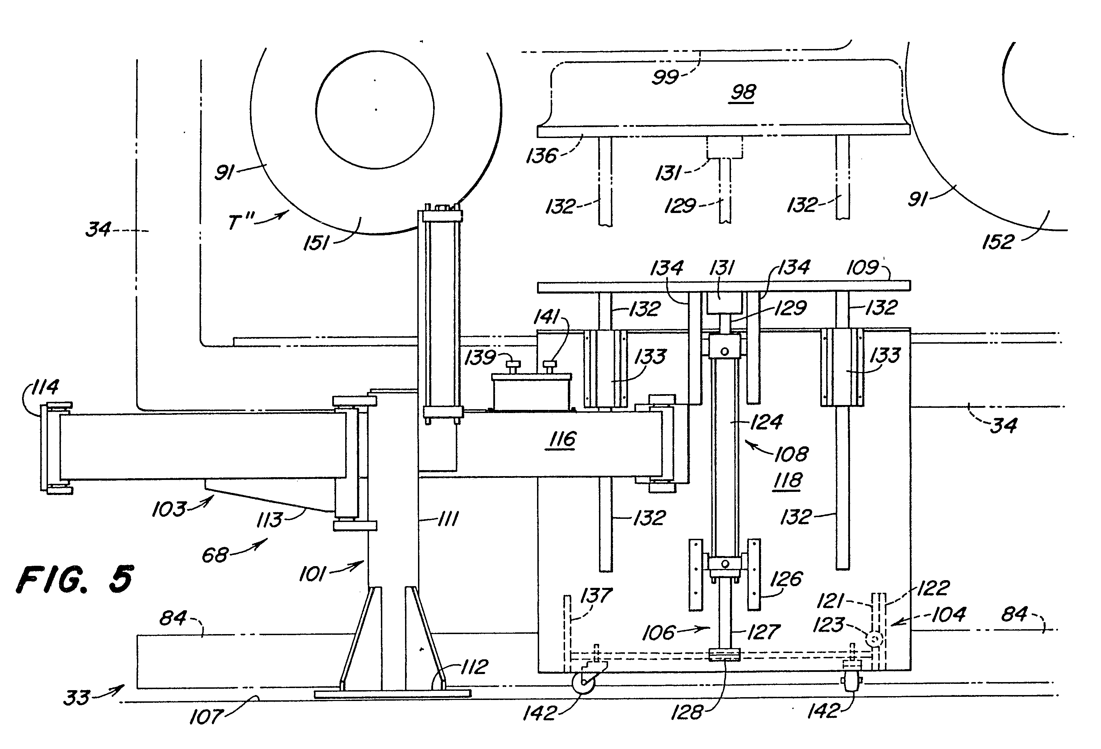

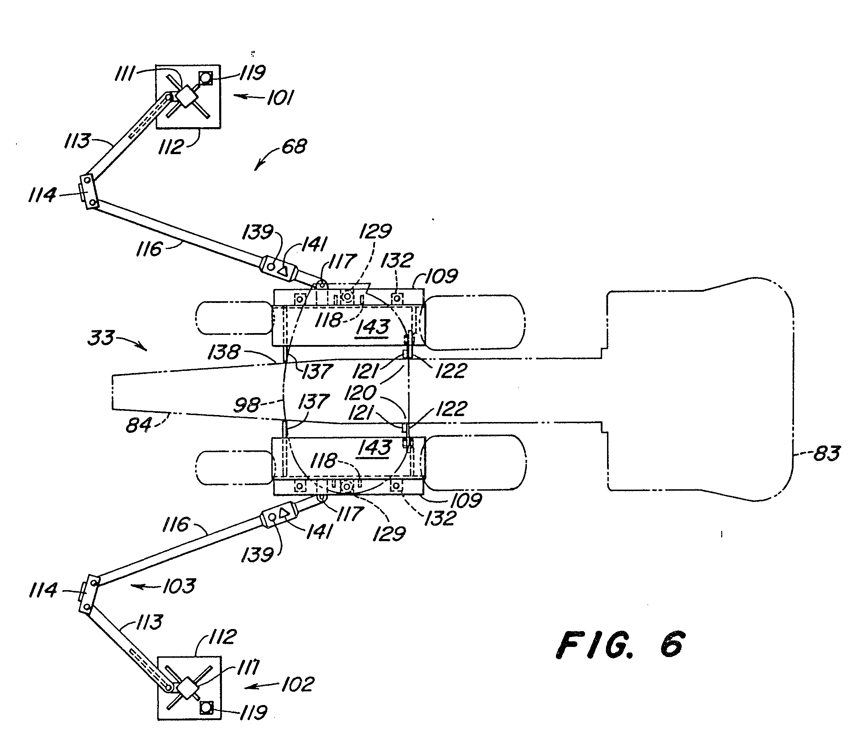

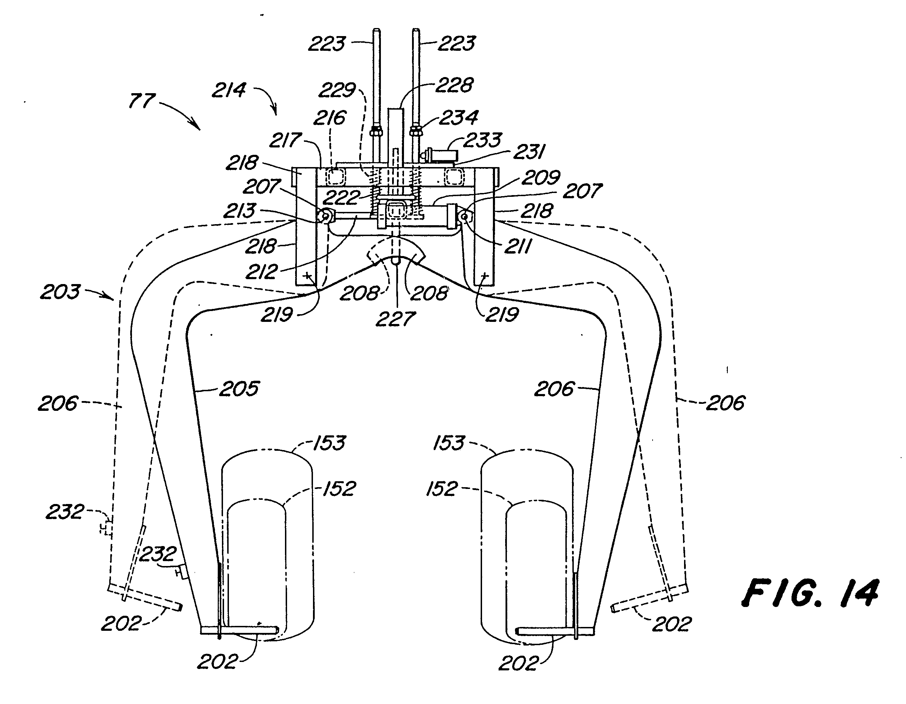

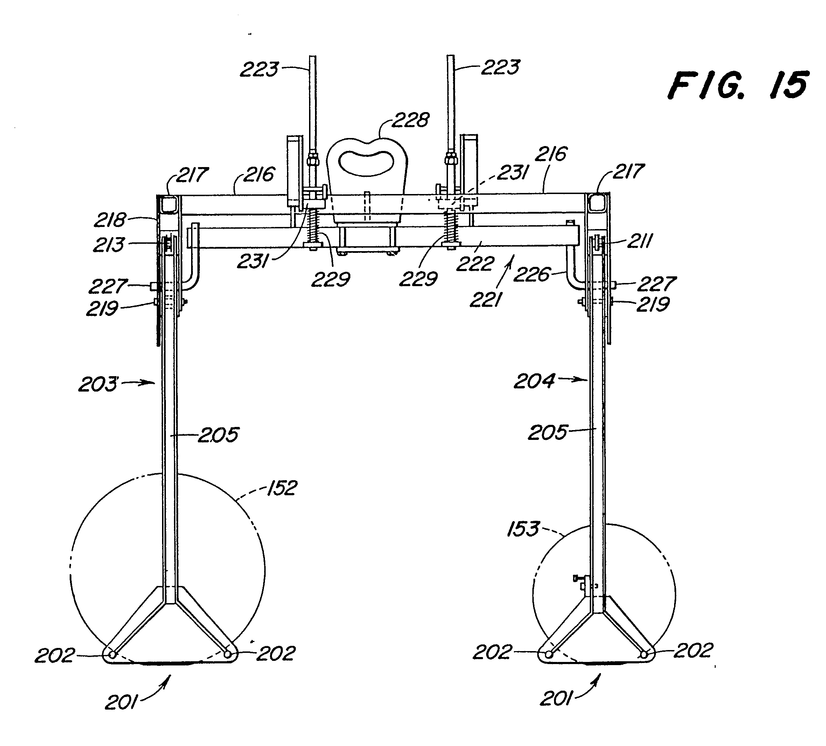

At the fourth island (44), each work station (44a), (44b), (44c), etc., is provided with special apparatus (68) for mounting a mower deck subassembly (98) (Figs. 5, 6) to the remainder of the tractor frame (71) at that location, and in sequence therewith also with special apparatus (72) (Figs. 7-13) for leveling the deck (69) to make certain it and the cutting blade (73) carried thereby are disposed horizontal to a level floor, or ground as it may be, for level and even mowing. Further, interposed between the islands (44) and (46), an audit are (64) and a repair area (76) are provided adjacent the control wire (36g). To separate a semi-finished or finished tractor T from a vehicle (33) at those locations for inspection and/or repair, a lifting mechanism (77) (Figs. 14, 15) is provided, the empty vehicle (33) then being shunted back onto the return wire (36h) for return to the first station (37).

As the tractors T continue through the last kitting area (52), final parts are added both to the vehicle carrier (34) and to the tractors (T) for completion thereof, the wire (36) then guiding the completed tractors (T) through the parallel work stations of the final island (46) where shipping crates (not shown) are formed about each tractor (T), and a plastic cover (not shown) is wrapped about each tractor (T). The vehicles (33) are then guided by wire (36i) to a discharge traveling deck (78) (Fig. 3), the carrier (34) is manipulated to change its clamped relationship with the tractor frame (32) from a dynamic condition to a static condition, the tractor (T) of each vehicle carrier (34) then being automatically released to roll along the deck (78) into and through a shrink tunnel (79) for shrinking the cover onto the tractor (T) and out onto an exit conveyor (81) for pickup and transportation.

More particularly as to the flexible assembly (30), the guide vehicle (33) is automatically guided, providing for controlled propulsion of the transport unit of the vehicle (33), for elevating movement of the carrier (34) relative to the transport unit, and for rotatable support of the tractor frame (32) about the along its longitudinal axis, to which additional parts and components are to be assembled at the plurality of work stations and kitting areas hereinbefore described, and with the parts and components also positionable on the carrier (34) at the kitting areas for subsequent assembly to the frame (32).

The automatic guided vehicle (33) has a cabinet (82) which encloses control and drive structure (not shown) responsive to a program that may either be programmed at the automatic guided vehicle (33) or directed thereto through the floor-mounted wire (36).

The drive structure includes a motor (not shown) which is drivingly connected to a floor-engaging drive wheel (94) (Fig. 7) which can also be turned for steering capability, as known in the art. Additional floor support is provided by swiveling casters (96), (97). Extending outwardly to the front of the transport unit and the automatic guided vehicle is a bumper (83) which can sense contact with an adjacent transport unit or any other object and effect stopping of the transport unit. A relatively narrow elongate frame (84) is secured to and extends for the full length of the work carrier (34). The length of the frame (84) to fully underlie the work carrier (34) provides a fixed length for the transport unit regardless of the position of the work carrier (34) and prevents undertravel of an adjacent transport unit when the work carrier (34) is in an elevated position. The frame (84) assures contact with a bumper (83) of an adjacent transport unit to prevent the undertravel. A further and complete description of the automatic guided vehicle (33) is found in EP-A 0 266 171.

At each work station (37) (Fig. 1), for example, sufficient space for one or more personnel is provided on either side of the vehicle (33), and one or more storage cabinets (87) are located for assembly tools, parts and all other components necessary for accomplishing the particular assembly and other requirements at that station (37). Not shown are overhead fixtures for accomplishing the same purposes. As seen at the second work station (38), additional parts bins (88) and the like are provided for the personnel to accomplish their assigned duties, like bins (89) being provided on either side of the work stations (41a), (41b), (41c) at the first island (41). Additionally, at the work stations (41a)-(41c), wherein a vehicle (33) is shown at each station, immediately prior to each station and immediately thereafter, "que-in" and "que-out" areas on each wire (36a) (36b), (36c) are provided such that a plurality of three vehicles (33) can be positioned at each station (41a)-(41c). The island (41) can therefore hold at one time a total of nine vehicles (33), or if more than three work stations at an island (41) are provided, total vehicles (33) computed by multiplying each work station times three vehicles. As with work stations (37), (38), personnel at the island work stations (41a)-(41c) can work on either side of the vehicles (33), this being true throughout the assembly (30).

Referring to Fig. 2, a vehicle (33) having a partially completed tractor (t') from the first island (41) is shown being guided by wire (36) past an overhead conveyor (59) carrying a flow in this instance of tractor tires (91) of various sizes, although it should be realized that any one of the parts of a tractor T can be carried by an overhead conveyor (59), larger subassemblies such as frame (32), fender decks, mower decks and the like being preferred. Within the first kitting area (48), provided with storage and parts bins (92), (93), personnel can place the tires (91) on the transport carrier (34) as shown in Fig. 2, can prepare parts and components for the tractor T as time permits, and can also perform certain assembling to the tractor frame (32) again as time permits. At the second island (42), personnel again having parts bins (94) and cabinets on either side of the path of a vehicle (33) moving through their work station (42a), (42b), for example, assemble the conveyed tires (91) on the tractor T' and perform other assembly functions to further add to the completeness of the tractor changing tractor T' from island (41) to tractor T" at island (42), subsequent alternating kitting and island areas functioning to assemble the completed tractor T.

The assembly of parts to the semi-completed tractor T" then continues in the same manner through the next alternately arranged island (43), and into the third kitting area (51) where mower deck subassembly units (98) (Fig. 5) are placed on the vehicle carrier (34) for subsequent assembly to the frame (32).

Referring now to Figs. 5 and 6 particularly, the deck mounting or lifting apparatus (68) is shown in detail, and comprises generally a pair of spaced stanchion units (101), (102), each independently mounted relative to the other to form thereby an open gate for an AGV vehicle (33) carrying a partially completed tractor T", for example. Each stanchion (101) and (102) is identical; therefore, only one (101) (Fig. 5) for example, will be described.

The stanchion unit (101) has an arm unit (103) pivotally mounted thereon for movement in a normally horizontal plane; a switch unit (104) mounted on the arm unit (103) and engageable with the vehicle (33) and operable to control all hydraulic operations of the stanchion unit (101), acting thereby as a safety switch; a floor engaging unit (106) mounted on the arm unit (103) and operable to releasably engage a floor surface (107) to steady and substantially prevent further movement of the arm unit (103); and a lift unit (108) including a lift bar (109) also secured to the arm unit (103). The lift bars (109) (Fig. 6), when in a lowered position, are movable via the arm units (103) to a spaced, parallel arrangement such as to receive and support a mower deck (98) placed thereon by personnel. The apparatus (68) is then actuated to raise the lift bars (109) and place the mower deck (98) in a position directly below and contiguous with the fender deck (99) part of the tractor T'' supported above the mower deck (98). Personnel then complete the assembly of the mower deck (98) to the tractor frame (99), the apparatus (68) is removed by either jackknifing the arm units (103) to a closed position, or opening them up completely such as in either arrangement to remove each arm unit (101) and associated parts from the path of movement of the vehicle (33) out of and further along the assembly path.

More particularly, each stanchion unit (101) includes a stand (111) with a floor plate (112) adapted to be secured to the floor (107) at a position (Fig. 6) spaced out of the path of the vehicle (33). It will be noted that the stands (111) are placed on opposite sides of the vehicle path in transverse alignment such that the guided vehicle (33) may readily pass therebetween. Swingably mounted on each stand (111) is a short arm (113) pivotally connected by an elbow element (114) to a long arm (116), the free end of which is pivotally connected by a wrist element (117) generally centrally of a large, flat, rectangular gate plate (118). The gate plate (118) is mounted in a normally vertical plane. A hydraulic cylinder (119) is mounted on the stand (111) for hydraulic connection (not shown) to all elements of each stanchion unit (101) and associated parts. The articulated arms (113) and (116) are movable between a jackknife position of a variable degree of openess, Fig. 6 showing a partially open position, and with the arms (113), (116) movable to a completely closed position when the arms (113), (116) are contiguous and parallel to a completely open flat out condition where the arms (113), (116) are virtually axially aligned. In the Fig. 6 position, the articulated arms (113), (116) of each arm unit (103) form an open gate to receive the guided vehicle (33).

The switch unit (104) is mounted on the inside front of each gate plate (118) for engagement with an adjacent portion (120) (Fig. 6) of the narrow frame (84) of a vehicle (33), and comprises mainly a trip plate (121) pivotally mounted about a horizontal axis to a brace (122) secured to the gate plate (118) and operable upon engagement with the vehicle portion (120)to activate a switch (123) mounted on the brace (122). Activation of the switch (123) actuates a hydraulic cylinder unit (124) supported on the gate plate (118) by a mounting bracket (126), and wherein a rod (127) (Fig. 5) with a foot (128) attached thereto move downwardly from a retracted position to engage the floor surface (107) for steadying the gate plate (118) and preventing it from movement; and wherein further a rod (129) having an adjustable head (131) thereon raises the lift bar (109) resting thereon a predetermined rod stroke. The outer ends of the lift bar (109) are connected to a pair of guide rods (132), each movably mounted in a pillow block (133) secured to the gate plate (118). Both rods (127) and (129) of the cylinder unit (124) move in normally vertical planes. When resting in the lowered inoperative position of the lift rod (129), the lift bar (109) rests upon a pair of stop elements (134) (Fig. 5) secured to the gate plate (118).

In operation, with the vehicle (33) stopped between each stanchion unit (101) and associated units described hereinbefore, it will be noted that a mower deck (98) has been previously placed on the carrier (34) of the vehicle (33). The vehicle (33) is programmed to raise the carrier (34) until the base (136) (Fig. 5) of the mower deck (98) is raised above the height of the lift bars (109), shown in their lowered, rest position in Fig. 5. The arm units (103) and associated units are then swung into the positions shown in Fig. 6 until a front gate (137) on the gate plate (118) engages a rear portion (138) of the narrow frame (84) of the vehicle (33), and the switch plates (121) engage the front portion (119). This also places the lift bars (109) in a parallel relation below the mower deck (98) (Fig. 6).

A manual switch (139) (Fig. 5) is then activated to activate the cylinder unit (124) to lower the foot (128) into engagement with the floor (107) and to raise the lift bars (109) into engagement with the base (134) of the deck (98), raising the mower deck (98) into a contiguous position directly below the fender deck (99), whereupon personnel engage and fasten the mower deck (98) to the tractor frame (99). Activation of another switch (141) de-activates the cylinder unit (124), lowering the lift rod (129) and the lift bars (109), and raising the foot rod (127) and foot (128), thus freeing the gate plate (118) to be swung away as desired. Casters (142) are secured to the bottom of the gate plate (118) to aid in movement thereof and to prevent catching the foot (128) on any obstruction on the floor (107). A top cover (143) is secured to the top edge of each gate plate (118), and extends inwardly at right angles therefrom as shown in Fig. 6. After appropriate inspection of the operation of certain units of the tractor T'', including the mower deck (98), the arm units (103) and associated units are swung out of the way of the vehicle (33) and it moves forwardly out of the deck lifting and mounting apparatus (68).

Referring to Figs. 7-13, the mower deck leveling apparatus (72) is illustrated. As background for same, when mowing grass there is a need to maintain the mower deck (98) level with respect to the plane of the wheels, front (151) and rear (152) (Fig. 7). This is particularly true of side to side levelness. If the deck (98) is higher on one side than the other, a mower will leave a "stairstepped" appearance. To prevent this from happening, we established a manufacturing specification that requires mower decks (98) mounted at the factory to be within a specific levelness tolerance. The mower deck (98) on a lawn tractor T has a linkage (not shown) on one side that can be adjusted to raise or lower that side of the deck (98). The opposite side of the deck (98) follows inversely because of there being a pivot point in the middle. It was determined that the most effective way to eliminate stairstepping was to position the blade (73) of the mower perpendicular to the direction of travel, measure the cutting height at the tips of the mower blades, then adjust the linkage until the cutting tips were at the same height.

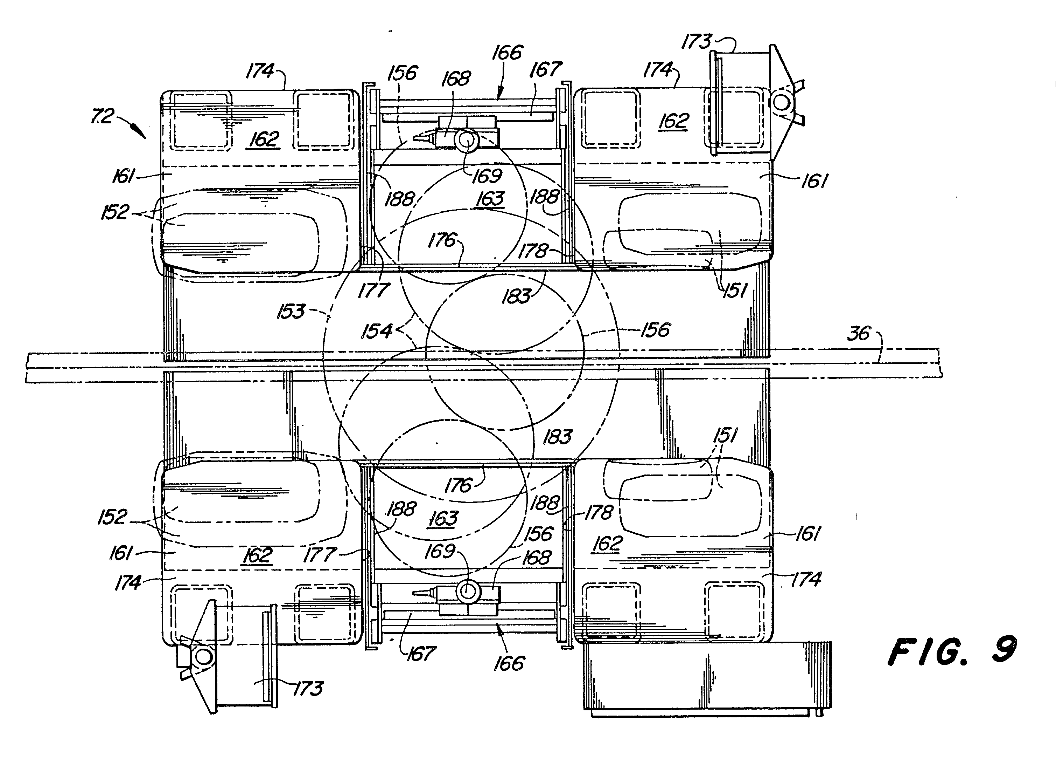

The original equipment purchased for this application was designed to accommodate three different size mower decks (98) that would be assembled to lawn tractors T on a conventional roller conveyor assembly line. The deck sizes were 30", 38", and 46". These decks have one, two and three blades, respectively. See the circular outlines (153), (154), (156) of said three deck sizes in Fig. 9. The original table purchased used three pairs of fixed probes. One pair of each mower deck. This required the tractor to be positioned correctly so that probe could travel in the Z axis and engage the blade tip. The basic measuring concept of this table was the princi ple of oil not being compressible. When the probe was raised, what was really happening was compressed air was used to move the rod in a hydraulic/air cylinder up so the probe was resting against the underside of the blade. This caused the oil which was in the top half of the cylinder to be displaced. The cylinder was piped directly to a twin cylinder which had a pointer that indicated its displacement. Thus, when the measuring cylinder would move a specific distance, the indicating cylinder moved the same. By having a pair of cylinders for each side of the blade and starting them at the same Z axis reference, we got a visual indication of the relative blade tip heights.

The above system while working well in principle, had liabilities as follows: (1) the cylinder seals sometimes leaked, allowing air into the oil which threw calibration off; (2) the machine did not give direct feedback while the operator was adjusting the linkage; (3) the machine was not as precise as desired; (4) the machine die not lend itself to quick repairs; (5) the readout was not as easy to see as desired; and (6) it did not allow for new mower decks or tractor configurations.

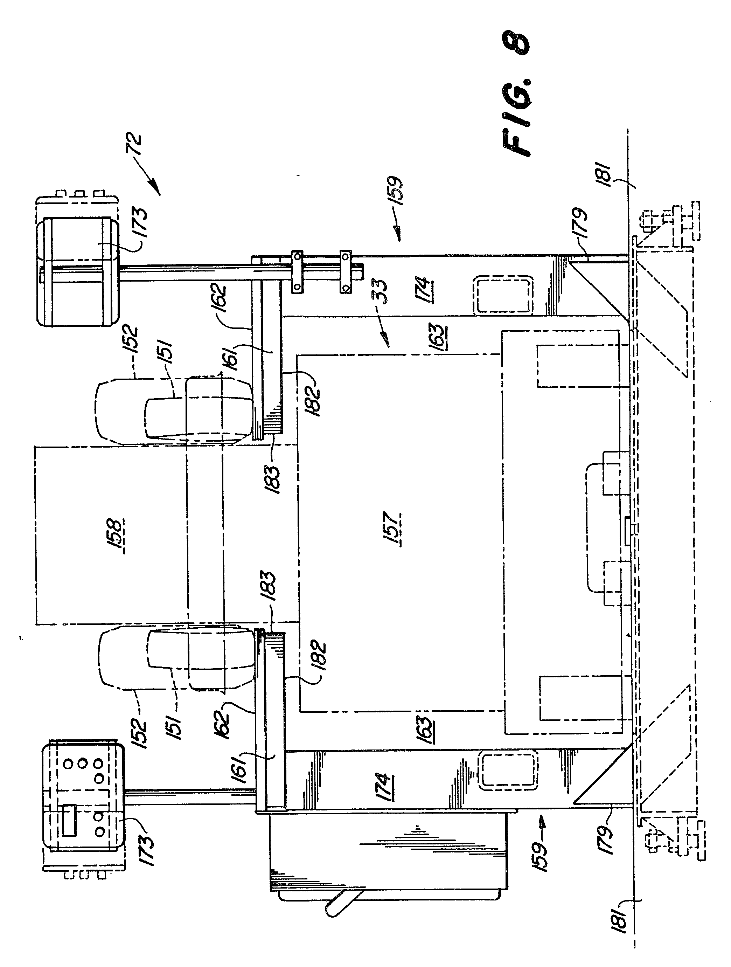

Subsequently, we began to consider using automatic guided vehicles (AGV's) (33) to support the tractor frame (32) while the tractor T was assembled. The AGV (33) would move the tractor through a series of assembly stations. The tractor T could be fully assembled without leaving the AGV's fixture until it was ready to be packaged. The exception to this scheme was deck leveling. Deck leveling requires the tractor to be placed on a flat level surface, resting on its own wheels. The challenge was to allow this without seriously affecting material flow and throughput. Our solution was the concept of a drive-through deck leveling table apparatus (72). We would build a table with a slot down the middle that would allow the AGV to raise the tractor above the table, the AGV body (157) (Fig. 8) would travel under the table, and the mast (158) of the AGV would travel through the slot. Once the tractor was positioned over the table, the AGV carrier (34) would lower the Tractor T onto the table where the leveling procedure could be completed. Once leveled, the AGV (33) could pick the tractor back up and drive away.

To accomplish these goals, the apparatus (72) for leveling the mower deck (98) of a lawn and garden mower vehicle T, carried in this instance on the movable carrier (34) of the guided vehicle (33), and wherein the mower deck (98) rotatably supports a blade (73), comprises: a pair of floor mounted frame structures (159) (Fig. 8) arranged in laterally spaced relation relative to the normal path of movement of the vehicle (33) over the floor (107), the spacing sufficient to permit the vehicle (33) to pass between the two frame structures (159) as illustrated in Fig. 8; the apparatus (72) comprising further a table (161) having a top surface (162) supported on each frame structure (159) and having an opening (163) (Fig. 9) formed therein, whereby with the vehicle (33) halted between the frame structures (159), the front and rear wheels (151), (152), respectively, of the mower vehicle T on each side thereof can rest upon the table top surface (162) (Fig. 8). In this manner, the opening (163) is disposed below the mower deck (98) and at least an outer end (164) of a blade (73) (Fig. 9), with the blade (73) rotated to a generally transversely extended position.

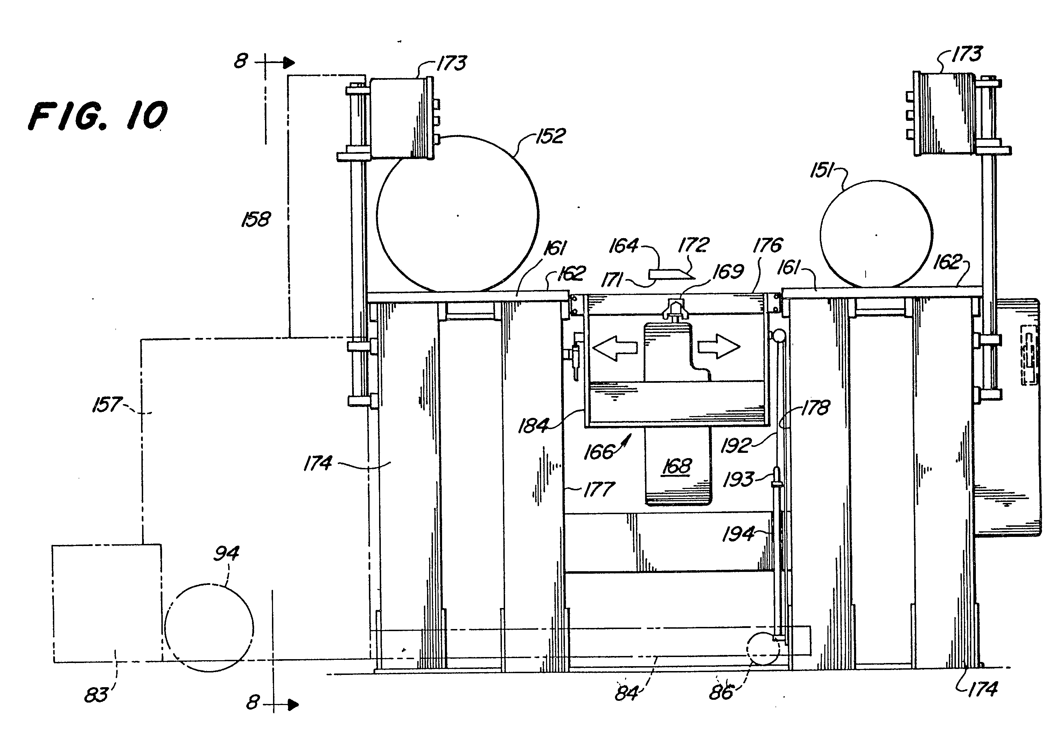

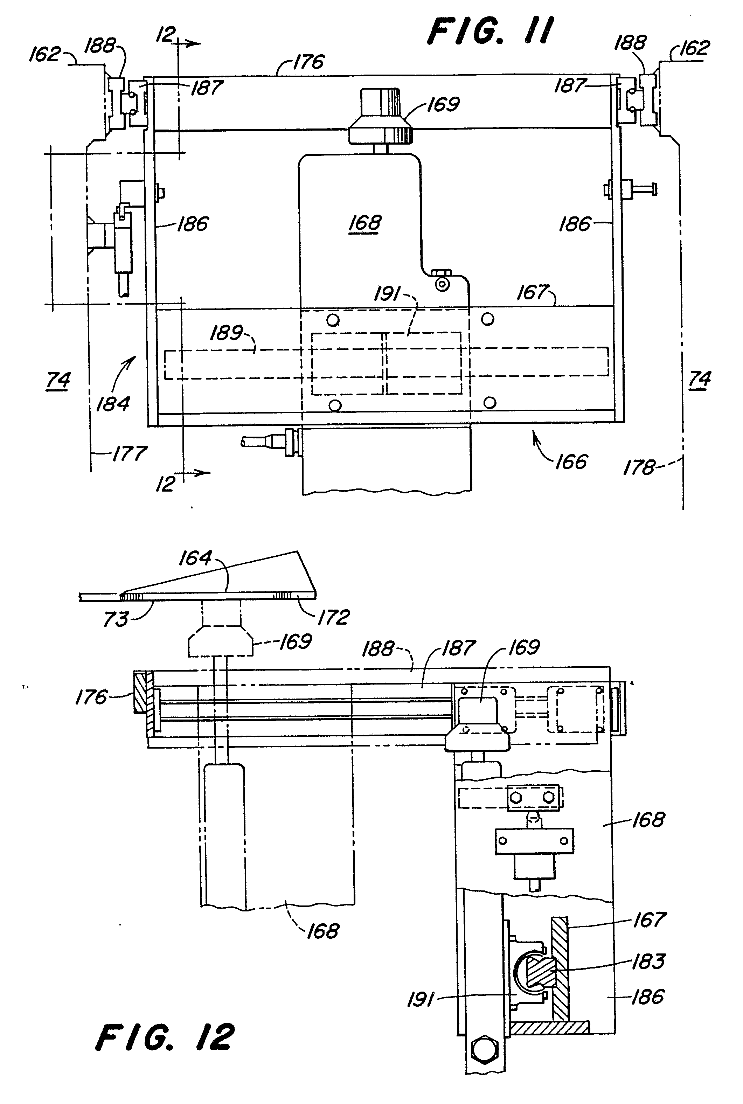

Further, the apparatus (72) comprises guide track units, one for each frame structure (159), each unit (166) mounted to each frame structure (159) and including a bar (167) (Fig. 8) extended longitudinally of a frame structure (159) and movable laterally relative to the remainder of the guide track unit (166) and within an opening (163) as best shown in Fig. 12. Further, a probe housing (168) (Figs. 9 and 10) is mounted on each bar (167) for slideable movement thereon longitudinally of each frame structure (159) and within each opening (163), the probe housing (168) having a vertically movable probe (169) as a part thereof which is disposed normally below the table top surface (162) (Fig. 12) and which probe (169) is raisable by operation of the probe housing (168) above kthe surface of the table top (162) to engage the undersurface (171) of a tip (172) of the blade (73). The deck leveling apparatus (72) includes further a control panel (173) mounted on a frame structure (159) and operatively associated with the probe housing (168) by known means for obtaining a measurement and a visible reading on the control panel (173) of the horizontal position of the blade (73) relative to the table top surface (162) thereby enabling leveling adjustment of the mower deck (98) by personnel at the island (44), if necessary, of the mower deck (98) to bring mower deck (98) within the parameters of the specifications set forth hereinbefore.

More particularly, each frame structure (159) includes a rectangular frame (174), the two longitudinally aligned and spaced frames (174) on each side of the apparatus interconnected by a brace (176) (Figs. 10, 12) along the inner sides thereof; the inner longitudinal sides (177), (178) of the frames (174) facing each other (Fig. 9) and outlining the longitudinal extent of the opening (163). Each frame (174) has a base (179) (Fig. 8) which may be either affixed to the floor (181), or if necessary imbedded therein to assure the top surface (162) of each table (161) being level. Each table (161) has a ledge portion (182) (Fig. 8) which extends inwardly from the inner surfaces of each frame (174) so as to extend over portions of the AGV vehicle (33) body (157), but with sufficient clearance between the inner ends (183) of the two ledge portions (182) such that the mast (158) of the vehicle (33) may pass therebetween (Fig. 8).

Guide track unit (166) for each frame structure (159) more particularly includes a U-shaped element (184) (Figs. 10, 11) having normally vertically disposed plates (186) in parallel, longitudinal alignment, the upper edges (187) of each of which is in sliding engagement with a guide (188) secured to the frame structure (159) along a transverse portion thereof at one side of each opening. The guides (188), also parallel and longitudinally spaced, extend normal to the path of movement of the vehicle (33) between the frame structures (159), the lower ends of the vertical plates (186) being joined with the longitudinally extended bar (167) (Fig. 11). Attached to or integral with the bar (167) and running longitudinally thereof is a rail (189) (Figs. 11, 12), which rail (189) is embraced by a sliding clamp (191) secured to the probe housing (168) for mounting the probe housing (168) slideably upon the bar (167) of the guide track unit (166) the latter being movable in horizontal plane transversely of the opening (163), and of course with the probe housing (168) being movable longitudinally of the opening (163) simultaneous with the transverse movement of each guide track unit (166).

As the internal workings of the probe housing (168) are commercially available, the probe housing (168) being purchased as a unit, suffice it to say that this housing (168) utilizes linear variable displacement transducer technology utilizing a spring loaded probe (169) that maintains pressure against the blade tip (172), which pressure allows the probe (169) to remain seated against the tip (172) even during linkage adjustment, allowing a continuous feedback to the operator via the control panel (173). The probe housing (168) puts out a voltage that is proportional to the displacement of a rod that travels through it comparable in travel to the rod for the probe (169), and with a volt meter put across the two voltage outputs so that a differential voltage is read between the two probe housings (168) used for the deck leveling apparatus (72). This signal is scaled prior to the volt meter so that the output of the meter is actually showing a differential in millimeters of the two blade tips (172) being measured by the two probes (169), from the reference surface (162). The display panel (173) on each side of the leveling table (161) allows the operator to run the process from either side. The display shows tenths of millimeters, and there is also a sign to indicate the direction that the operator needs to adjust the mower deck (98) in order to reduce the differential to zero, if possible.

Although not shown herein, a gauge may be added to the apparatus (72) to measure front-to-back levelness of a rider mower deck (not shown) at front-to-back levelness. This gauge consists of a probe comparable to (169) mounted on an elongated shaft which may be placed upon opposite sides of the apparatus top surfaces (162) such that the probe thereof may be inserted below and engaged with either end of a mower blade. An additional control panel operatively connected to the separate gauge probe housing may be provided for the operator utilizing a red panel light if the gauge reading is not within the specified range, and a green panel light if the reading is within the range.

The guide track (166) which carries the probe housing (168) is connected by a cable (192) to a rod (193) (Fig. 10), which rod (193) is pneumatically mounted in a cylinder (194) therefor secured to a side of a frame (174), and whereby operation of the cylinder (194) effects a cable controlled retracting movement of the guide track unit (166) from any outwardly spaced position as shown in dashed lines in Fig. 12, back to an original position longitudinally between the frames (174) of each frame structure (159) (Fig. 12). When released, the cylinder frame structure (159) (Fig. 12). When released, the cylinder (194) arrangement permits each guide track unit (166) to be manually moved transversely inwardly for positioning the normally lowered probe (169) into position below a blade tip (172), and prior to the probe (169) being pneumatically raised to engage blade tip (172).

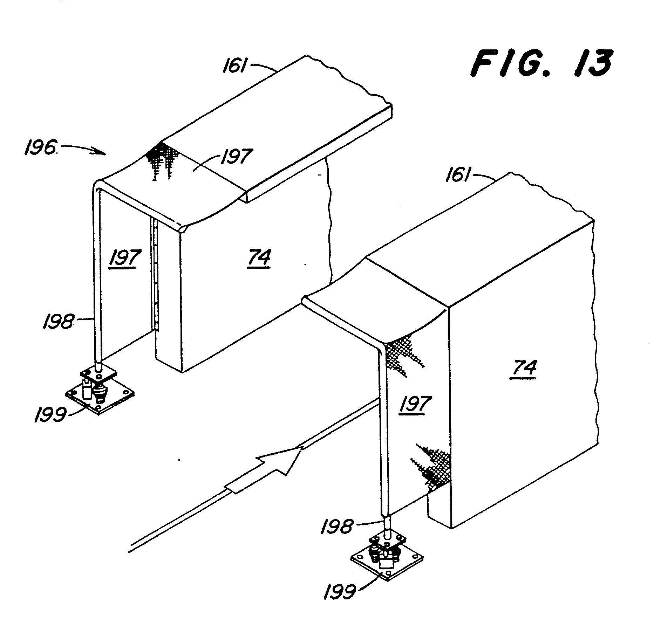

To prevent an operator inadvertently standing or otherwise located in front of a vehicle (33) moving toward the deck leveling apparatus (72) (Fig. 7) from being contacted by the vehicle (33), and even though each vehicle bumper (83) is arranged such as to automatically stop a vehicle (33) upon engagement with any object, an awareness device (196) (Figs. 7, 13) is provided at each end of each pair of frame structures (159) facing the direction of an oncoming vehicle. The awareness device (196) each comprises a flexible element (197) (Fig. 13) which is secured at one end to each adjacent frame (174) and table (161), and which is further secured at its forward end to an L-shaped rod (198), the base of each rod (198) being secured to a floor mounting (199). By this arrangement, should an operator be engaged between a vehicle (33) oncoming toward the deck leveling apparatus (72), the operator would move against the flexible awareness device (196) sufficient to alert him or her to the oncoming vehicle (33), giving him/her sufficient time to move out of the path of the vehicle (33).

Additional apparatus for leveling the mower deck (98) of a conventional mower or tractor T is also provided, though not illustrated herein, which comprises a table for supporting the tractor T or mower on the surface thereof, and having a pair of parallel, transversely spaced, longitudinally aligned, elongated openings formed in the table; with guide track units comparable to (166) mounted below the openings and with probes (169) for each probe housing (168) raisable from a position normally below the table to a position through one of the openings to engage an undersuface of a tip (172) of a blade (73), and with a unit including a control panel (173) operatively associated with the probe housing (168) for obtaining a measurement and a visable reading of the position of the blade (73) as specified hereinbefore. In this manner, the quality, repeatability, and flexibility of the deck leveling apparatus described hereinbefore is again available.

Secondly, apparatus for leveling the mower deck (98) may comprise a floor supported table comparable to (161) for supporting a tractor T or another type of mower for movement thereon, which table has an opening comparable to (163) formed therein, but with a grate (not shown) secured to the table comparable to (161) and over the opening (163), the grate of course having a plurality of openings formed therein; and with a probe housing similar to (168) having a base provided therefor which is movably mounted on the floor supporting the table below the grate, and wherein the probe (169) of the floor mounted probe housing (168) is raisable through the grate for engagement with a tip (172) of the blade (73) for measurement and adjustment of the deck (98) as specified hereinbefore. The probe housing comparable to (168) in this instance may have a pneumatic unit as a part of the base thereof which in one condition permits the probe housing (168) to move freely about the floor and below the grate, and in another condition clamps the base to the floor while the probe (169) is being utilized to effect its measurement capabilities.

Referring to Figs. 14 and 15, the lifting mechanism (77) for separating a substantially completed tractor T from the vehicle (33) at the audit area (63) (Fig. 3) and the repair area (76)m is illustrated, comprising generally a pair of laterally spaced first lift units (201) each of which comprises a triangularly shaped structure having a pair of longi tudinally spaced, parallel lift bars (202) normally disposed in a horizontal plane; a pair of arm units (203,204) spaced longitudinally, each arm unit including a pair of transversely aligned, depending, substantially identical arms (205,206) disposed in the same plane, and with each arm having a first ear (207) and a second extended ear (208). As mounted, the ears (207) of each pair of arms (205, 206) are laterally spaced (Fig. 14), with the extended ears (208) overlapping for a purpose hereinafter described. To effect movement of the arms (205,206) of each pair (203,204), a hydraulic piston and cylinder unit (209) is provided, the cylinder pivotally connected at (211) to a first ear (207) of an arm (206), and with the rod (212) of the unit (209) pivotally connected at (213) to a first ear (207) of arm (205) (Fig. 14).

A rectangular lift bracket (214) is provided, having elongated, longitudinally extended upper braces (216) joined at their ends by a pair of end braces (217), with a pair of depending braces (218) mounted at the outer ends of each end brace (217), whereby pivotal connections (219) are provided at the lower ends of the depending braces (218) for each pair of arms (205,206). By this arrangement, actuation of the piston and cylinder unit (209) effects a pivoting of the arms (205,206) of each set of arm units (203,204) in a transverse or lateral manner relevant to a tractor T, only the front (151) and rear (152) wheels thereof being shown in the illustrations Fig. 14 and 15. It should be noted that the wheels (151,152) of each mower T are free and clear of obstructions to the sides thereof such that lateral pivotal movement of the arms (205,206) (Fig. 14) toward and away from engagement of the wheels (151,152) is unencumbered.

A pinch unit (221) is provided as a part of the lifting mechansim (77), and which includes an elongated beam (222) (Fig. 15) extending longitudinally between each pair of arms (203, 204), and with the beam (222) adjustably connected to the lift bracket (214) by a quartet of separator rods (223, 224), each rod having a spring (229) embracing it and with the spring (229) extended between a cross bar (231) welded to and extended between braces (216). At each end of the beam (222), an L-shaped pinch rod (226) is secured with a portion (227) disposed directly below the ears (208). Movement of the arms (205, 206) away from each other is thereby prevented.

A lifting hook (228) is affixed to the lift bracket (214) and the beam (222) for securement to a grappling hook (not shown) of an overhead conveyor (not shown) for maneuvering the lifting mechanism (77) into position for engaging a tractor T on a vehicle (33), where upon actuation of the lifting mechanism (77) by operation of the cylinder unit (209), via a switch (232) (Fig. 14), effects an embracing of the wheels (151 and 152) sideways, fore and aft of each wheel as best shown in Fig. 15, raising of the entire lifting mechanism (77) effecting a separation of the tractor T from the vehicle (33). In this condition of the arms, the springs (229) are in a contracted condition, the beam (222) and the lift bracket (214) being moved together due to the lift on the beam (222) and the tractor weight on the arms (205) (206). A safety air valve (233) (Fig. 14) is thereby rendered operative, a valve actuator (234) on at least one rod (223) not engaging the valve (233), resulting in the switch (232) becoming inoperative for safety reasons.

Upon lowering the lifting mechanism (77) to the floor, thus removing the lifting head, the springs (229) and a pair of assist cylinder units (236) act to separate the beam (222) and the lift bracket (214), returning or lowering the separator rods (233) (Fig. 15) such that the actuator (234) is de-activated, activating thereby the switch (232). The cylinder unit (209) is free to be again activated by switch (232) to force the arms (205), (206) of each unit apart, releasing the tractor T.

## II. Process of Assembly

In the present flexible assembly system (30) for assembling a product, such as a lawn and garden tractor T, wherein the assembled product is built-up completely from and by association of parts with a frame member (32) of the product, kthe assembly system (30) comprises the following process: providing a first work station (37) having a flow of frame members (32) for the tractor T moving thereof; providing a plurality of steerable vehicles (33) each capable of carrying a frame (32); guiding said vehicles (33) in axial alignment through said first work station (37) and mounting a frame (32) on each vehicle (33); guiding said vehicles (33) in axial alignment through a second work station (38) and assembling additional parts to said frame (32); providing an island area (41) having one or more work stations (41a-41c) for each vehicle (33), guiding said vehicles (33) sequentially into each island work station (41a-41c), adding additional parts to said frame (32) of each vehicle (33); providing a first kitting area (48) having a flow of further additional parts thereto; guiding said vehicles (33) sequentially from said island work stations (41a-41c) to said first kitting area (48) for placing said further additional parts (91) on each of said vehicles (33) in said kitting area (48); guiding said vehicles (33) sequentially from said first kitting area (48) to a second island area (42) similar to said first island area (41), removing said further additional parts (91) from each said vehicle (33) and assembling said further additional parts (91) to said frame (32) on each vehicle (33) at each said second island work station (42); providing additional successive kitting areas (49), (51), (52), and island areas (43), (44), (46), in alternating sequence as defined in the preceding sequence; guiding said vehicles (33) in succession through said additional areas (49), (43), (51), (44), (52), (46); guiding said vehicles (33) in continued sequence through said alternating kitting and island areas; and assembling thereby a complete product T on each vehicle (33).

More particularly, the process includes assembling one or more parts to the frame (32) on each vehicle carrier (34) at each work station described herein, releasably locking and clamping each frame (32) to each vehicle carrier (34) at the first station (37) for retaining the frame thereto in a dynamic condition throughout the assembly process, which process includes rotating the frame (32) at various stages, and automatically guiding the vehicles (33) along a wire (36) by a predetermined program. The vehicles (33) are sequentially directed through single work stations one-by-one in axial alignment, through island areas in a parallel arrangement, and through the kitting areas again in axial front-to-rear alignment. It is noted that the vehicles (33) are directed, however, to and from the kitting areas in a path normal to the path of vehicles (33) through the island areas (41)-(44), and further that the flow of parts of each kitting area (48), (49), (51), (52) are generally normal to the flow of vehicles (33) through the island areas (41)-(44) as determined by the parts paths of the overhead conveyors (56), (59), (61), (62), (67).

The process further comprises directing the same number of vehicles (33) into and through a second kitting area (49) (Fig. 2) for example, as the number of vehicles at an isalnd work station (42b), for example. Thus, as described before, if work station (42b) can have a total of three vehicles (33) thereat, one in "que-in", one in the station, and one in "que-out", only three vehicles are programmed to be in the kitting area (48) to prevent overloading the system.

At the kitting area (51) and island (44), the process may include placing a mower deck (98) on each vehicle (33) into a position below the frame (32), raising or lifting the mower deck (98) at the island apparatus (68) into a position directly below and contiguous with the frame (32), and attaching the deck (98) to frame (32). Directly thereafter but while still at the island (44), each guided vehicle (33) is automatically moved through deck leveling apparatus (72) and halted thereat. The carrier (34) is programmably moved to rest the tractor onto the deck leveling apparatus (72), the mower deck (98) then is leveled, the carrier (34) and the vehicle (33) and tractor thereon are programmably moved out. The process includes further separating a tractor T from a vehicle (33) by a tractor lifting device (77) for inspection and/or repair with the empty vehicle (33) returned to the first station (37), and of course the separated tractor T can be replaced onto the empty vehicle (33).

Thus, it can be seen that at least all of the stated objectives have been achieved.

Obviously, many modifications and variations of the present invention are possible in light of the above teachings. It is therefore to be understood that, within the scope of the appended claims, the invention may be practiced otherwise than as specifically described.

## Claims

1. An assembly line for a vehicle or other product comprising a plurality of stations and guided vehicles (33) for moving the products from station to station, characterized in that the stations comprise work stations (41a, b, c; 42a, b, c; ....) arranged in island areas (41, 42, 43, 44, 46) and kitting stations (48, 49, 51, 52) alternating with the island areas, each kitting station having means (59, 92, 93) for supplying components to a guided vehicle (33) for transportation to the succeeding island area, where assembly of such components is effected and each island area (e.g. 41) comprising one or more of the work stations (41a, 41b, 41c).

2. An assembly line according to claim 1, characterized in that at least some island areas (41, 42, 43, 44, 46) comprising a plurality of work stations (e.g. 41a, 41b, 41c) arranged in parallel.

3. An assembly line according to claim 1 or 2, characterized in that the guided vehicles (33) leaving one island area (e.g. 41) and entering the next adjacent island area (42) traverse a loop (47) extending out to the side of the island areas, with a kitting station (48) located on the loop (47).

4. An assembly line according to claim 3, characterized in that the guided vehicles (33) move parallel to a first direction through each work station (41a etc.) and the loops (47) extend generally perpendicular to this first direction out to the side of the island areas.

5. An assembly line according to any of claims 1 to 4, characterized in that one or more single work stations (37, 38) are provided on a path (36) for the guided vehicles (33) leading to the first island area (41).

6. An assembly line according to any of claims 1 to 5, characterized in that the island areas (41, 42, 43, 44, 46) are arranged in a longitudinal alignment, guided vehicle paths (36a, b..... ) through each island area extending in alignment with common paths through the other island areas.

7. An assembly line according to any of claims 1 to 6, characterized by a closed loop path (36) leading through all work stations and kitting areas for moving guided vehicles (33) therethrough.

8. An assembly line according to claim 7, characterized by means for controlling the movement of the guided vehicles (37) on the closed loop path (36).

9. A method of assembling vehicles or other products wherein each product is built up progressively at a succession of work stations (41a, b, c: 42A, b, c;...) on a frame (32) supplied to a guided vehicle (33) at a first work station (37), the guided vehicles being guided through work stations in succession, characterized in that the work stations (41a, b, c; b, c,...) are arranged in a plurality of island areas (41, 42, 43, 44, 46) and the guided vehicles (33) are deviated between successive island areas through kitting stations (48, 49, 51, 52) alternating with the island areas, and components are supplied to the guided vehicles at the kitting stations for assembly at the succeeding island area work stations.

10. A method according to claim 9, characterized by assembling one or more parts on the frame (32) on each guided vehicle (33) at the first work station (37).

11. A method according to claim 1 or 2, characterized in that each frame (32) is releasably locked to its guided vehicle (33) and is rotated about its longitudinal axis at predetermined times on the vehicle.

12. A method according to claim 9, 10 or 11 characterized by moving the frame (32) on the guided vehicle (33) vertically at a predetermined time.

13. A method according to any of claims 9 to 12, characterized by automatically guiding all the vehicles (33) through the work stations.

14. A method according to any of claims 9 to 13, characterized in that the guided vehicles (33) are shunted at each island area (e.g. 41) into a plurality of work stations (41a, b, c) arranged in parallel.

15. A method according to any of claims 9 to 14, characterized in that the guided vehicles (33) are held as required in queue-in and queue-out spaces respectively preceding and following the work stations of each island area.

16. A method according to any of claims 9 to 15, characterized in that the guided vehicles (33) are directed through the island area work stations in a generally linear path.

17. A method according to claim 16, characterized in that the guided vehicles (33) are directed from and then to a pair of successive island areas (41, 42) via a kitting area (48) located therebetween in a path generally normal to the path of vehicles through the island areas.

18. A method according to any of claims 17 or 18, characterized by directing a flow of parts in each kitting area (48 etc) generally normal to the flow of guided vehicles (33) through the island areas.

19. A method according to any of claims 9 to 18, characterized by assembling parts to the frame (32) on each of the guided vehicles (33) at the first kitting area (48).

20. A method according to claim 15, characterized by directing at least the same number of vehicles (33) from each island area into each kitting area.

21. A method according to claim 20, characterized by directing the said same number of vehicles into a kitting area in sequence.

22. A method according to any of claims 9 to 21, characterized by separating a frame (32) from a vehicle (33) to which the frame was attached, for inspecting and/or repairing the frame.

23. A method according to claim 21, characterized by directing the empty vehicle (33) back to the first work station (37).

24. A method according to claim 1, characterized by placing a mower deck below the frame (32) and lifting the deck into position below the frame for attaching the deck to the frame.

25. A method according to claim 24, characterized by moving the frame by operation of the vehicle prior to placing the mower deck therebelow.

26. A method according to claim 1, characterized by placing a mower deck on each vehicle at a predetermined kitting station, raising the mower deck at a subsequent island area by a lift apparatus into contiguous relation with a frame on its vehicle, and assembling the raised mower deck to the frame.

27. A method according to claim 1, characterized by gauging the horizontal disposition of a mower deck attached to each frame on each vehicle prior to completion of the assembly of the product.

28. A method according to claim 27, characterized by guiding each vehicle through a deck levelling apparatus, stopping the vehicle, raising the vehicle frame with deck above a horizontal portion of the apparatus, lowering the vehicle frame with deck on to the horizontal portion until tyres on the frame engage the horizontal portion, levelling the deck, raising the frame with deck, and guiding the vehicle with frame and deck out of the deck levelling apparatus.

29. A method according to claim 28, characterized by moving a pair of gauge members each on an X-Y path, positioning each gauge member below a portion of a cutting blade of a mower deck, those portions being diametrically opposed, raising the gauge members into contact with a blade and obtaining a differential read-out of opposed ends of the cutting blade position relative to a horizontal plane, and adjusting the mower deck to a predetermined horizontal position as determined by the read-out.

30. A method according to claim 18, characterized in that light manufacturing areas are located contiguous to the kitting areas, and by moving parts from the light manufacturing areas towards the kitting areas in a direction generally parallel to the flow of parts in the kitting areas.

31. A method according to claim 30, characterized by moving the light manufacturing area parts in a path generally normal to the flow of vehicles through the island areas.

FIG. I

FIG. 2

FIG. 3

OVERHEAD CONVEYOR

EP 0 308 248 A2

**F I G. 4**

FIG. 5

EP 0 308 248 A2

FIG. 6

FIG. 7

FIG. 8

FIG. 9

EP 0 308 248 A2

FIG. 10

**FIG. 11**

**FIG. 12**

*FIG. 13*

*FIG. 14*

FIG. 15